(19) Europäisches Patentamt
European Patent Office
Office européen des brevets

(11) **EP 2 265 010 B1**

(12) **EUROPEAN PATENT SPECIFICATION**

(45) Date of publication and mention
of the grant of the patent:
**15.07.2015  Bulletin 2015/29**

(21) Application number: **10166207.0**

(22) Date of filing: **16.06.2010**

(51) Int Cl.:
***H04N 7/01*** *(2006.01)*

(54) **Film mode detection through optimal successive mode elimination**

Film-Mode-Detektion durch optimale schrittweise Elimination der Modi

Détection de mode cinéma par élimination optimale et successive des modes

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority:  **19.06.2009  TR 200904798**

(43) Date of publication of application:
**22.12.2010  Bulletin 2010/51**

(73) Proprietor: **Vestel Elektronik Sanayi ve Ticaret A.S.**
**45030 Manisa (TR)**

(72) Inventors:
• **OZER, Nuri**
**45030, Manisa (TR)**

• **BASTUG, Ahmet**
**45030, Manisa (TR)**

(74) Representative: **Cayli, Hülya**
**Paragon Consultancy Inc.**
**Koza Sokak No: 63/2**
**GOP**
**06540 Ankara (TR)**

(56) References cited:
**EP-A1- 1 198 138        US-A- 5 563 651**
**US-A1- 2002 135 697    US-A1- 2005 018 767**

**Description**

**Technical Field**

The present invention relates to a method and system for film mode detection.

**Prior art**

Generally, a movie film comprises 24 progressive frames per second (fps); so to display the movie film on TV, the frame rate of movie should be changed to 50 or 60 fps in accordance with the NTSC or PAL standards. The 'telecine' devices (which perform the process of converting motion picture film into video form) enable a motion picture, captured originally on film, to be viewed with TVs or computers by using some pull-down techniques (pattern).

For example, to display 24 FPS movie on 60Hz NTSC TV, the telecine device performs 3:2 pull-down pattern. Since the most common conversion is 24 FPS to 60 FPS, in the prior art most of the film mode detection methods and systems are focused on that situation.

In the prior art, there are already several patent applications on film mode detection. Since it is a detection problem and wrong detection might lead to catastrophic consequences in the applications using the detection result, the performance of the method; and whether the context will enable using particular scheme features or not are important criteria in film mode detection.

In published patent application US 7233361 (Film mode detection method using periodic pattern of video sequence) such a film mode detection method is disclosed. In which; the differences between two frames that are arranged within a predetermined distance on a time line is calculated, these differences are compared with the first predetermined threshold and these differences are limited to threshold value, then the output of the comparison is filtered and the power of filtered video sequence is calculated. Finally, it is decided whether the video sequence is film mode or not by using the comparison output between the power of filtered video sequence and the second predetermined threshold.

The published patent application of US7233361 (Apparatus for and method of detecting whether incoming image signal is in film mode) encloses a film mode detection method and apparatus which uses the motion information by comparing variations of motion information in two frames that are arranged within a predetermined distance on a time line.

Patent document US5563651A discloses a method and apparatus for identifying video fields produced by film sources. In this document, an interlaced video input signal containing fields is provided from a film or camera sources. Then, a binary number is generated for each field of said interlaced video signal representing net motion during one field interval and said binary numbers are analyzed for detecting the patterns representative of film sourced fields. During the binary number analyze, to provide for each field difference a sign bit and a group of magnitude bits a field-to-field difference is taken from said binary numbers. Said magnitude bits than compared with a first threshold value and a threshold indicating signal is generated. Said threshold indicating signal and said sign bit are inputted to correlators. Said correlators are addressed at a field rate in a 3-2 and 2-2 pull down operating modes. Finally, it is detected that in in either mode when one and only one of said correlators indicates a count indicative of film mode operation.

Another patent document EP1198138A1 discloses a method and apparatus for film mode detection in video fields. According to this document, sequence of video fields to be encoded is received; absolute pixel differences between spatially corresponding pixels of a current and a previous field is calculated; said absolute pixel differences for a first predefined portion of a field is accumulated and a first difference value is provided; existence of a motion between said fields checked by first difference value and if a predefined pattern is detected within a sequence of motion indicators, film mode is identified.

Another patent document US2005018767A1 discloses apparatus and method for detecting film mode. According to this document, absolute differences between I period-spaced-fields are calculated. Then, absolute changes of absolute differences are calculated. According to calculated absolute differences and change of the absolute differences, film modes are detected. Finally, by comparing said film modes, a final film mode is decided.

Another patent document US2002135697A1 discloses system and method for detecting a non-video source in video signals. According to this document, a plurality of signals are generated in accordance with pixels input from said video sequence. Then, a pattern in said video sequence is detected in accordance with a preset threshold. Said preset threshold is varied in accordance with said signals and said pattern detection state machines are governed for determining whether or not a non-video source is embedded in said video sequence.

In addition to 24 FPS movie, there are also 25 fps, 30fps, 50 fps and 60 fps videos which are displayed on TV. Depending on the NTSC and PAL standards, these videos' frame rates are required to be changed to 50 or 60 fps, by using telecine devices (pull-down techniques).

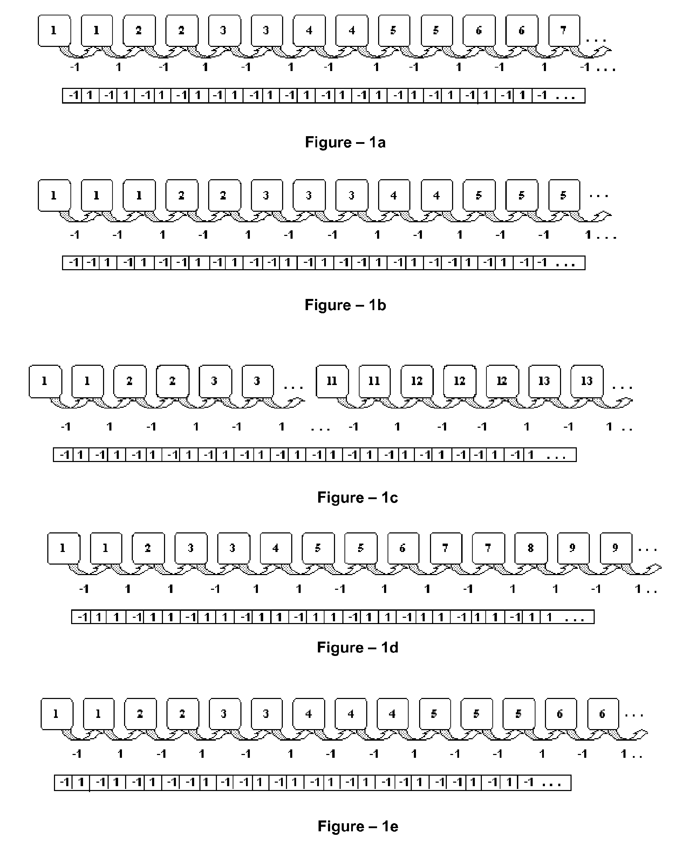

See figures 1a to 1e, which show the pull-down (film mode) patterns, in addition to the explanation of different possible film modes given below:

According to figure 1;
**-1** means, the difference metric between two consecutive frames is smaller than a predefined threshold value;
**1** means, the difference metric between two consecutive frames is larger than a predefined threshold value.

Figure 1a, shows a schematic of "2:2" pull down pattern. Typical examples for this pattern are 24 fps to 48 fps, 25 fps to 50 fps, 30 fps to 60 fps.

Figure 1b, shows a schematic of "3:2" pull down pattern. A typical example for this pattern is 24 fps to 60 fps.

Figure 1c, shows a schematic of "2:2:2:2:2:2:2:2:2:3" pull down pattern. A typical example is 24 fps to 50 fps.

Figure 1d, shows a schematic of "2:2:1" pull down pattern. A typical example is 30 fps to 50 fps.

Figure 1e, shows a schematic of "2:2:2:3:3" pull down pattern. A typical example for this pattern is 25 fps to 60 fps.

However, the known methods and systems in the prior art can not observe all of these videos having different frame rates.

## Object of the invention

The object of the invention is to provide a film mode detection method and system which is capable of observing all types of videos having different frame rates.
Another object of the invention is to improve the accuracy in terms of recognizing the correct mode, by using successive elimination principle.
Another object of the invention is to provide a generic, flexible and adaptable film mode detection method.

## Brief Description of the Drawings

Figures 1a-1e show the pull-down (film mode) patterns of the prior art.
Figure 2 shows a general system in accordance with an embodiment of the invention.
Figure 3 shows a general system in accordance with another embodiment of the invention.
Figure 4 shows the inner structure of the successive film mode detection module in accordance with an embodiment of the invention.

## Detailed Description of the Invention

The method and system according to the present invention perform film mode detection through optimal successive elimination by also using all the existing side information which provides accurate film mode detection.
The present invention comprises a solution with several possible performance increasing configurations which could be used in flat panel TVs and any other device that requires film mode detection.
As demonstrated in figures 1a to 1e, there are various different film/video patterns.

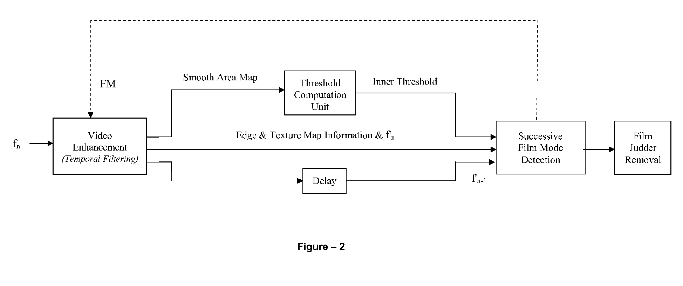

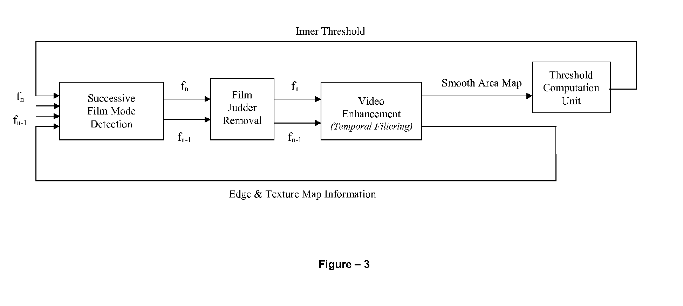

Figure 2 and Figure 3 shows two different implementations of the method and system according to the present invention. The core functional block is "successive film mode detection" block. Film mode detection can be designed to work in cooperation with a video enhancement or analysis system; which generally contains edge detector and/or noise variance computation unit and/or temporal filtering functionalities. In this case, side information obtained from these parts can be utilized to improve the performance of the film mode detector.
Benefit from such a feedback signalling for film mode detection is irrelevant of the precedence of film mode detection and video enhancement or analysis in the system. On the other hand video enhancement system can also benefit from a film mode detection feedback signal provided that it is located before film mode detection in the processing chain. Since the detection of a film mode is an indicator of repeated redundant frames, when applied after a video enhancement system, e.g. a chip, a HW/SW circuitry, a feedback signal can be applied to avoid redundant operations on redundant frames. By this way, some possibly existing temporal filtering, temporal decision routines, i.e. anything applied temporally on consecutive frames, can be adjusted accordingly to skip redundant frames in their processing. This will serve multiple purposes such as providing power and computation savings.

The first step of the proposal is to prepare a look up table (LUT) which defines the order of pattern recognition test, which should be applied on a predefined (supported) mode set. The criteria for ordering are

- a-priori probabilities of modes,
- the amount of risk, i.e. the consequences, on the wrong choice of each mode,
- pattern distances between two consecutive modes under test and pattern lengths,
- different impact levels of motionless scenes on different patterns,
- and finally the impact of noise.

All these criteria are considered to define a pattern recognition test order in a LUT. These criteria are clarified in the following examples.

For example, let's say we need to recognize a pattern among the following mode set: 1:1, 2:2 and 2:2:2:2:2:2:2:2:2:2:3. In other words, we have a 50Hz panel and we want to differentiate 50Hz, 25Hz and 24Hz sources respectively when we receive 50Hz frame rate video data.

A-priori we know that 50Hz source corresponds to video mode, i.e. news, games etc. broadcasting mode, 25Hz is the most common film mode packaged in DVDs and finally 24 Hz is a rarer film mode in packaged media even though film material is in fact originally recorded at 24fps (When recorded to DVDs, PAL films are generally sped up from 24fps to 25fps).

From a-priori probability point of view one can judge that the most reasonable ordering is 50fps, 25fps and 24fps.

From the risk point of view (from the film judder removal application perspective) it is not much harmful to put the hypothesis that the frame sequence is video, i.e. source is 50fps, although it is not. This mistake has only the consequence of allowing the video sequence pass through as it is, by passing the film judder removal functionality. The opposite is quite harmful, though. If a sequence is detected as film when it was in fact video, in film judder removal application, then several video scene shots are discarded and the same scenes are attempted to be reconstructed from their previous and next neighbouring frames. This is like closing your eyes and trying to imagine what is in front of your eyes instead of simply looking at it.

From pattern distance and length point of view it is again reasonable to put 50fps test in the first order since it ideally (in a nonzero motion case) takes only 2 frames to decide whether the sequence is video, i.e. not film, and the correlation distance from a video to other film modes is the largest among the distances from any single pattern to other patterns. Correlation computations will be explained in more detail later.

From motion statistics point of view, it is again reasonable to put 50fps test in the first order. In case there is no motion in a video scene, i.e. a static scene, if we first test film modes we might then erroneously judge that the consecutive frames are the same and hence belongs to a film. Motionless scenes always bias the decisions towards modes with more repeated scene configurations. In order to compensate for such possible bias, it is better to force the test priority order towards modes with less repeated scenes. In our particular example, this necessitates first doing 50 fps tests, and then 25fps test and then 24fps test.

Even though the ordering criteria are not limited with the listed ones, our last element is the impact of noise. Noise has an opposite influence on the ordering choice. Noise will bias the decisions towards judging that the frames are different. Especially the differentiation between the video mode and film modes will be quite sensitive to noise. By using the same order described above, robustness can be achieved via defining noise floor thresholds while comparing consecutive frames. On the other hand, noise existence has a risk-minimizing aspect since it biases the decisions towards video which, as explained before, is less harmful than the opposite case.

Figure 2 shows the successive film mode detection module working in collaboration with a video enhancement or analysis module. Video enhancement module supplies the noise threshold levels and the map of the regions where frame subtraction will be applied. The former helps improving the decision performance whereas the latter serves also for decreasing the complexity. Subtraction should be in general applied on the edges and textured regions where motion and hence pixel difference shows itself better. Therefore an edge and/or texture map feedback is quite beneficial. Even in the noise free case, there might be effects originating from the video enhancement module which impacts film mode decisions. For example if there are temporal filtering operations in the video enhancement processing chain, then this will change the same consecutive frames to different consecutive frames. This may cause, for example, judging film mode sequence wrongly as a video sequence in the following film mode detection module. Considering a temporal filtering operation, the noise threshold values can be adjusted accordingly. When there is noise, the noise variance can either be supplied to the threshold computation unit or instead a smooth area map can be fed so that threshold computation unit can compute itself over smooth regions.

Figure 2 and Figure 3 shows two different implementations of the present invention. In the first one video enhancement or analysis comes before film mode detection. Hence a feedback can be provided in order to avoid redundant processing in video enhancement or analysis modules over redundant frames during film modes. This feedback is not necessary in the system shown in figure 3 since during video enhancement all the frames are supposed to be different from each other.

According to the general scheme shown in figure 2, the system takes the frame ($f_n$), enhances the frame, calculates the inner threshold by using the information about smooth area and noise variance, then detects the film mode by using the frame ($f_n$) and the previous consecutive frame ($f_{n-1}$), and finally removes the film judder.

According to the general scheme shown in figure 3, two consecutive frames are taken (e.g. $f_{n-1}$ and $f_n$), film mode is detected by using original video, film judder is removed according to film mode detection, then different consecutive frames are enhanced and finally inner threshold value is calculated for successive film mode detection by using information about smooth area and noise variance and this value is sent to the successive film mode detection unit as a feedback signal.

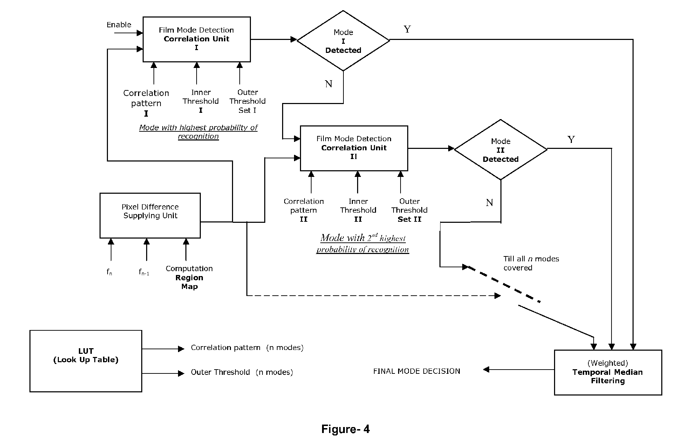

Figure 4 shows the inner structure of the successive film mode detection module. The process has n stages, i.e. modes under test. As can be seen, its modular structure is compatible with similarly shaped film mode detection sliding correlation units (FMD-SCU) which can be easily implemented in hardware or software. There is one shared pixel difference supplying unit which computes the difference between the pixels in the given computation region map, which basically contains the addresses of edge and texture regions. Each sliding correlation unit gets three different types of information when it is enabled: sliding correlation pattern, inner threshold (ITh) which is the noise variance floor supplied by the external threshold computation unit, explained in an earlier section, and an outer threshold range (Oth) which is used for detecting a pattern during sliding correlation phase. The correlation patterns and the outer threshold values associated with the ordered modes are supplied by a look-up table or memory.

The processing performed by a film mode detection sliding correlation unit is now explained step by step.

**Step1**: Frame difference over two consecutive frames in computation region map is compared with the inner threshold (ITh) if $|f_n - f_{n-1}| \geq ITh$ then $r_i = 1$ else $r_i = -1$ where $r_i$ is the frame difference decision and, $f_n$ shows the $n^{th}$ frame, $f_{n-1}$ shows the n-1$^{th}$ frame.

**Step2**: Mode pattern **s** is correlated (inner product) with frame difference **sequence** r in a sliding manner during a test specific period (TSP) which is common for all modes under test and which is sufficient to differentiate all the modes in ideal conditions. $c_{max,m} = \max \mathbf{r_j}^* \mathbf{s}$ where $j \in \{(m-1)TSP+1,...,mTSP\}$ and $\mathbf{r_j} = [r_{j-k+1}, r_{j-k+2},...,r_j]$ and $c_{min,m} = \min |\mathbf{r_j}^* \mathbf{s}|$ where $j \in \{(m-1)TSP+1,...,mTSP\}$ and $\mathbf{r_j} = [r_{j-k+1}, r_{j-k+2},...,r_j]$ where m is the time index of the TSP time interval.

**Step3**: We use two comparison criterions over the sliding correlation outputs to judge whether the mode is active or not.

if $c_{max,m} \geq OTh\_H$ then mode under test is tentatively decided to be active.

if $c_{min,m} \leq OTh\_L$ then mode is definitely NOT active (this decision can be over-written on the previous tentative decision) If the mode under test is detected to be "not active", then steps 1 to 3 are repeated with the next mode in line. If in the end none of the modes are detected, which has a very low probability, then the algorithm either decides for the video mode or an "undefined" mode.

For example, for 50Hz TV, assume that 3 modes: 24fps, 25fps or 50fps are defined. **r** can be '1, 1, 1, 1, 1, 1, 1, 1, 1, 1, 1,..., ,1, 1' for 50fps, '-1, 1, -1, 1, -1, 1, -1, 1, -1, 1,...,-1, 1' for 25fps, and '-1, 1, -1, 1, -1, 1, -1, 1, -1,..., -1, 1, -1, -1, 1' for 24fps. Firstly, the video sequence must be checked for 50fps, and s should be '1, 1, 1, 1, 1, 1'. If the video sequence is 50fps, $C_{maxm}$ must be '6', so the $OTh\_H$ should be '6'. Otherwise, the video sequence should be passed to the next step in film mode detection algorithm. $OTh\_L$ can be selected as, say 0 (a far value) since we do not want it to have any influence on the decision. For the second step, video sequence must be checked for 25fps because 25fps broadcasting is more common than 24fps broadcasting. **s** mode pattern, should be '-1, 1, -1, 1, -1, 1'. If video sequence is 25fps, $c_{max,m}$, the maximum result of correlation (inner product) between **s** and **r** must be '6'. By taking the noise and other interferences into consideration, OTh_H can be selected to have such smaller value as 4. $OTh\_L$ can be selected as, say again 0, this time meaning a common correlation output value with the next mode, i.e. 24fps mode. If the video sequence is not detected to be 25fps, then the algorithm should pass to the last step: 24fps. For 24fps, **s** should be '-1, 1, -1, -1, 1, -1'. If the sequence is 24fps, $c_{max,m}$ will be '6'. Since this is the last step if $c_{max,m}$ is not 6, then the film mode is decided to be the 50fps sequence.

See following, the LUT according to an embodiment of the invention (used in this example).

|  | Correlation Pattern | | | | | | Outer Threshold ($OTh\_H$) | Outer Threshold ($OTh\_L$) |
|---|---|---|---|---|---|---|---|---|
| **24 FPS** | -1 | 1 | -1 | -1 | 1 | -1 | 6 | 0 |
| **25 FPS** | -1 | 1 | -1 | 1 | -1 | 1 | 4 | 0 |
| **30 FPS** | -1 | 1 | -1 | 1 | 1 | -1 | 6 | 0 |
| **50 FPS** | 1 | 1 | 1 | 1 | 1 | 1 | 6 | 0 |

The decisions obtained periodically by test specific period are temporally smoothed out in a large time period support (filter kernel size) by (weighted) median filtering. When applied, weighting could again be adjusted based on risk-minimizing requirements. The aim of this filter is to detect the changing time of modes, and to protect output video from incorrect video sequence. By the aid of this principle, if there is a mode change in time period, the final decision will be the mode that will give us the video with minimum errors. This method and system can be applied to televisions and any other device which requires Film Mode Detection.

**Claims**

1. A film mode detection method which uses a successive pull-down mode detection module as well as a look up table that contains a plurality of pull-down mode correlation patterns, which are ordered according to criteria comprising a-priori probabilities of pull-down modes, amount of risk on the wrong choice of each pull-down mode, pattern distances between two consecutive pull-down modes under test and pattern lengths, different impact levels of motionless scenes on different patterns and impact of noise,

   wherein said look up table further contains pairs of outer threshold values (OTh_H, OTh_L), each pair being associated with a pull-down mode correlation pattern, said method comprising the steps of:

   - Computing a frame difference ($f_n$ - $f_{n-1}$) between two consecutive frames of a frame sequence by computing the difference between pixels in a given computation region map of said frames, wherein said computation region map contains the addresses of edge and texture regions and is computed in a video enhancement module for each frame,
   - Comparing the computed frame difference with an inner threshold value (ITh), which is calculated by a threshold computing unit by using the information about smooth area and noise variance,
   - If the computed frame difference is higher than said inner threshold, assigning for each pair of consecutive frames a frame difference decision value as 1, otherwise assigning for each pair of consecutive frames a frame difference decision value as -1,
   - Selecting the first pull-down mode correlation pattern (s) in the look up table as pull-down mode under test,
   - Correlating said pull-down mode correlation pattern (s) of the pull-down mode
   under test with a sequence of assigned frame difference decision values ($r_j$), in a sliding manner and, fort each sequence of assigned frame difference decision values, calculating two correlation values ($c_{max,m}$, $c_{min,m}$) during a test specific period (TSP),
   - Comparing the first correlation value ($c_{max,m}$) with a first outer threshold (OTh_H) and the second correlation value ($c_{min,m}$) with a second outer threshold value (OTh_L), wherein said first and second outer threshold values correspond to the pair associated with the pull-down mode under test,
   - Deciding whether the pull-down mode under test is active or not according to the result of the comparison of the correlation values and said outer threshold values,
   - If active, performing a temporal median filtering among the active pull-down modes, and deciding the final pull-down mode,
   - If not, turning back to the correlation step and repeating the following steps with the next pull-down mode correlation pattern in the look up table as a pull-down mode under test.

2. A method according to Claim 1 **characterized in that** said first pull-down mode correlation pattern under test is the 50fps mode pattern.

3. A method according to claim 1, wherein said two correlation values ($C_{max,m}$, $c_{min,m}$) are calculated such that:

$$c_{max,m} = \max \mathbf{r_j}^*\mathbf{s} \text{ where } j \in \{(m-1)\text{TSP}+1,...,m\text{TSP}\} \text{ and } \mathbf{r_j} = \left[ r_{j-k+1}, r_{j-k+2}, ..., r_j \right]$$

$$c_{min,m} = \min \left| \mathbf{r_j}^*\mathbf{s} \right| \text{ where } j \in \{(m-1)\text{TSP}+1,...,m\text{TSP}\} \text{ and } \mathbf{r_j} = \left[ r_{j-k+1}, r_{j-k+2}, ..., r_j \right]$$

where m is the time index of the test specific period.

4. A method according to Claim 3 wherein the step of deciding whether the pull-down mode under test is active or not is based on two comparison criteria using said two outer threshold values (OTh_H and OTH_L) such that:

if $c_{max,m} \geq OTh\_H$ then said pull-down mode under test is detected tentatively,

if $c_{min,m} \leq OTh\_L$ then said pull-down mode under test is not active.

5. A system for detecting film mode comprising;

• a video enhancement module for enhancing a frame ($f_n$), and for computing a computation region map containing the addresses of edge and texture regions,

• a threshold computing unit for calculating an inner threshold (ITh) by using the information about smooth area and noise variance, taken from the enhancement module,

• a successive pull-down mode detection unit,

• a film judder removal for removing the film judder,

wherein said successive pull-down mode detection unit comprises:

a look up table that contains a plurality of pull-down mode correlation patterns (s), which are ordered according to criteria comprising a-priori probabilities of pull-down modes, amount of risk on the wrong choice of each pull-down mode, pattern distances between two consecutive pull-down modes under test and pattern lengths, different impact levels of motionless scenes on different patterns and impact of noise,

wherein said look up table further contains pairs of outer threshold values (OTh_H,OTh_L), each pair being associated with a pull-down mode correlation pattern;

a frame difference computing unit adapted to compute the difference between two consecutive frames ($f_n$ - $f_{n-1}$) of a frame sequence by computing the difference between pixels in said computation region map of said frames;

first comparing means adapted to compare the computed frame difference with said inner threshold value (ITh);

assigning means adapted to assign a frame difference decision value for each pair of consecutive frames, wherein, if the computed frame difference is higher than said inner threshold, the frame difference decision value is equal to 1 and otherwise the frame difference decision value is equal to -1;

selecting means adapted to select the first pull-down mode correlation pattern in the look up table as pull-down mode under test;

correlating means adapted to correlate said pull-down mode correlation pattern (s) of the pull-down mode under test with a sequence of assigned frame difference decision values ($r_j$) in a sliding manner, by calculating, for each sequence of assigned frame difference decision values, two correlation values ($c_{max,m}$, $c_{min,m}$) during a test specific period (TSP);

second comparing means adapted to compare the first correlation value ($c_{max,m}$) with a first outer threshold value (OTh_H) and to compare the second correlation value ($c_{min,m}$) with a second outer threshold value (OTh_L), wherein said first and second outer threshold values correspond to the pair of outer threshold values associated with the pull-down mode under test;

deciding means adapted to decide whether the pull-down mode under test is active or not, according to the result of the comparison of the correlation values with said outer threshold values;

wherein, if the pull-down mode under test is active, said deciding means is adapted to perform a temporal median filtering among the active pull-down modes and further adapted to decide the final pull-down mode; and wherein, if the pull-down mode under test is not active, said means for deciding is adapted to turn back to the correlation means, second comparing means and deciding means with the next pull-down mode correlation pattern in the look up table as a pull-down mode under test.

**Patentansprüche**

1. **Filmmodus-Erfassungsverfahren,** welches ein fortlaufendes Pull-Down-Modus- Erfassungsmodul verwendet sowie eine Look-up-Tabelle, die eine Vielzahl von Pull- Down-Modus-Korrelationsmuster beinhaltet, die nach Kriterien geordnet sind und umfassen

A-Priori-Wahrscheinlichkeiten von Pull-Down-Modi, Größe des Risikos der falschen Wahl jedes Pull-Down-Modus, Musterabstände zwischen zwei konsekutiven Pull- Down-Modi im Test und Musterlängen;

unterschiedliche Einfluss- oder Wirkungsebenen von bewegungslosen Szenen zu unterschiedlichen Mustern und Einfluss oder Wirkung von Rauschen, wobei die Look- Up-Tabelle auch Paare äußerer Schwellenwerte (OTh_H, OTh_L) enthält und jedes Paar einem Pull-Down-Korrelationsmuster zugeordnet ist, das Verfahren mit folgenden Schritten

- Berechnen einer Bilddifferenz oder eines Frame-Unterschieds ($f_n$ - $f_{n-1}$) zwischen zwei konsekutiven Bildern (Frames) einer Frame- oder Bildsequenz durch Berechnen des Unterschieds zwischen Pixeln in einer gegebenen Berechnungsbereichskarte (Map) der Bilder oder Frames, wobei die Map des Berechnungsbereichs die Adressen von Kanten- und Texturbereichen enthält und für jedes Bild oder Frame in einem Video-Verbesserungsmodul berechnet wird;

- Vergleichen der berechneten Frame- oder Bilddifferenz mit einem inneren Schwellenwert (ITh), der von einer Schwellen-Berechnungseinheit durch Verwenden der Informationen über glatte oder weiche Flächen und Varianz des Rauschens berechnet wird;

- Falls die berechnete Differenz oberhalb der inneren Schwelle liegt, wird für jedes Paar konsekutiver Frames oder Bilder ein Differenz-Entscheidungswert von 1 zugeordnet, andernfalls wird für jedes Paar konsekutiver Frames oder Bilder ein Differenz-Entscheidungswert von -1 zugeordnet;

- Auswählen des ersten Pull-Down-Korrelationsmusters (s) in der Look-Up- Tabelle als Pull-Down-Modus im Test;

- Korrelieren des Pull-Down-Korrelationsmusters (s) des Pull-Down-Modus im Test mit einer Sequenz von zugeordneten Differenz-Entscheidungswerten (rj) in gleitender Weise und für jede Sequenz von zugeordneten Differenz-Entscheidungswerten, Berechnen von zwei Korrelationswerten ($c_{max,m}$, $c_{min,m}$) während einer testspezifischen Periode (TSP);

- Vergleichen des ersten Korrelationswerts ($c_{max,m}$) mit einer ersten äußeren Schwelle (OTh_H) und des zweiten Korrelationswerts ($c_{min,m}$) mit einem zweiten äußeren Schwellenwert (OTh_L), wobei der erste und zweite äußere Schwellenwert mit dem Paar korrespondiert, das dem getesteten Pull-Down- Modus zugeordnet ist;

- Entscheiden, ob der getestete Pull-Down-Modus aktiv ist oder nicht, entsprechend oder an Hand des Ergebnisses des Vergleichs der Korrelationswerte und der äußeren Schwellenwerte;

- Falls aktiv, Ausführen einer zeitlichen Medianfilterung innerhalb der aktiven Pull-Down-Modi, und Entscheiden oder Auswählen des finalen Pull-Down- Modus,

- Falls nicht, Rückkehren zu dem Korrelationsschritt und Wiederholen der folgenden Schritte mit dem nächsten Pull-Down-Modus-Korrelationsmuster in der Look-Up-Tabelle als Pull-Down-Modus im Test.

2. Verfahren nach Anspruch 1, **dadurch gekennzeichnet, dass** das erste getestete Pull- Down-Modus-Korrelationsmuster das 50 fps Modus Muster ist (Mode Pattern).

3. Verfahren nach Anspruch 1, wobei die zwei Korrelationswerte ($c_{max,m}$, $c_{min,m}$) so berechnet werden, dass

$$c_{max,m} = \max r_j * s$$
$$\text{wobei } j \in \{(m - 1)TSP + 1,..., mTSP\}$$

und $r_j = [r_{j-k+1}, r_{j-k+2}, ..., r_j]$

$$c_{min,m} = \min | \mathbf{r_j} * \mathbf{s} |$$
$$\text{wobei } j \in \{(m - 1)TSP + 1,..., mTSP\}$$

und $r_j = [r_{j-k+1}, r_{j-k+2}, ..., r_j]$
mit m als Zeitindex der testspezifischen Periode (Zeitdauer).

4. Verfahren nach Anspruch 3, wobei der Entscheidungsschritt, ob der getestete Pull- Down-Modus aktiv ist oder nicht, auf zwei Vergleichskriterien basiert, unter Verwendung der zwei äußeren Schwellenwerte (OTh_H und OTh_L) so, dass
wenn $c_{max,m} \geq$ OTh_H
dann wird der getestete Pull-Down-Modus vorläufig oder versuchsweise detektiert wenn $c_{min,m} \leq$ OTh_L
dann ist der getestete Pull-Down-Modus nicht aktiv.

5. System zur Erfassung eines Filmmodus mit

- einem Video-Verbesserungsmodul zum Verbessern oder Aufwerten eines Frames oder Bilds ($f_n$) und zum Berechnen einer Berechnungsbereichs-Karte (Map), welche die Adressen von Kanten- und Texturbereichen enthält,
- einer Schwellen-Berechnungseinheit zum Berechnen einer inneren Schwelle (ITh) durch Verwenden der Information über glatte oder weiche Flächen und Varianz eines Rauschens, dem Verbesserungsmodul entnommen,
- einer fortlaufenden Pull-Down-Modus-Erfassungseinheit,
- einem Filmruckel-Entferner zum Entfernen von Filmruckeln, wobei die fortlaufende Pull-Down-Modus-Erfassungseinheit umfasst:

eine Look-Up-Tabelle, die eine Vielzahl von Pull-Down-Modus-Korrelationsmustern (s) enthält, die nach Kriterien geordnet sind, die umfassen:

A-Priori-Wahrscheinlichkeiten von Pull-Down-Modi, Risiko (Risikowerte) der falschen Wahl jedes Pull-Down-Modus, Musterabstände zwischen zwei konsekutiven Pull-Down-Modi im Test und Musterlängen, unterschiedliche Wirkungsebenen oder Einflusspegel von bewegungslosen Szenen von unterschiedlichen Mustern und Rauscheinfluss, wobei die Look-Up-Tabelle des Weiteren Paare äußerer Schwellenwerte (OTh_H, OTh_L) beinhaltet und jedes Paar einem Pull-Down-Korrelationsmuster zugeordnet ist;
einer Frame- oder Bilddifferenz-Berechnungseinheit, angepasst die Differenz zwischen zwei konsekutiven Frames oder Bildern ($f_n$ - $f_{n-1}$) einer Frame- oder Bildsequenz zu berechnen, durch Berechnen des Unterschieds zwischen Pixeln in der Berechnungsbereichs-Karte der Bilder;
einem ersten Vergleichsmittel, angepasst die berechnete Differenz mit dem inneren Schwellenwert (ITh) zu vergleichen;
einem Zuordnungsmittel, angepasst einen Differenz-Entscheidungswert für jedes Paar konsekutiver Frames oder Bilder zuzuordnen, wobei der Entscheidungswert gleich 1 ist, falls die berechnete Differenz größer als die innere Schwelle ist, und andernfalls der Entscheidungswert gleich -1 ist;
einem Auswahlmittel, angepasst das erste Pull-Down-Modus-Korrelationsmuster in der Look-Up-Tabelle als Pull-Down-Modus im Test auszuwählen;
einem Korrelationsmittel, angepasst das Pull-Down-Modus-Korrelationsmuster (s) des Pull-Down-Modus im Test mit einer Sequenz zugeordneter Differenz-Entscheidungswerte ($r_j$) in gleitender Weise zu korrelieren, durch Berechnen von zwei Korrelationswerten ($c_{max,m}$, $c_{min,m}$) während einer testspezifischen Periode (TSP) für jede Sequenz zugeordneter Entscheidungswerte;
einem zweiten Vergleichermittel, angepasst den ersten Korrelationswert ($c_{max,m}$) mit einem ersten äußeren Schwellenwert (OTh_H) zu vergleichen und den zweiten Korrelationswert ($c_{min,m}$) mit einem zweiten äußeren Schwellenwert (OTh_L) zu vergleichen, wobei der erste und zweite äußere Schwellenwert mit dem Paar äußerer Schwellenwerte korrespondiert, die dem getesteten Pull-Down-Modus zugeordnet sind;
einem Entscheidungsmittel, angepasst zu entscheiden ob der getestete Pull-Down-Modus aktiv ist oder nicht, entsprechend dem Ergebnis des Vergleichs der Korrelationswerte mit den äußeren Schwellenwerten;
wobei,
falls der getestete Pull-Down-Modus aktiv ist, das Entscheidungsmittel ausgebildet ist, eine zeitliche Medianfilterung unter den aktiven Pull-Down-Modi auszuführen und des Weiteren ausgebildet ist den finalen Pull-Down-Modus zu bestimmen oder auszuwählen; und
falls der getestete Pull-Down-Modus nicht aktiv ist, das Entscheidungsmittel angepasst ist zu dem Korrelationsmittel, dem zweiten Vergleichsmittel und dem Entscheidungsmittel zurückzukehren, mit dem nächsten Pull-Down-Modus- Korrelationsmuster in der Look-Up-Tabelle als Pull-Down-Modus im Test.

**Revendications**

1. Procédé de détection de mode de film qui utilise un module de détection de modes de conversion successifs ainsi qu'une table de recherche qui contient une pluralité de motifs de corrélation de modes de conversion, qui sont ordonnés selon des critères comprenant les probabilités a priori de modes de conversion, la quantité de risque sur le mauvais choix de chaque mode de conversion, les distances entre motifs de deux modes de conversion consécutifs en cours de test et des longueurs de motifs, les niveaux d'impact différents de scènes sans mouvement sur différents motifs et l'impact du bruit, ladite table de recherche contenant en outre des paires de valeurs de seuil externes (OTh_H, OTh_L), chaque paire étant associée à un motif de corrélation de mode de conversion, ledit procédé comprenant les étapes consistant à :

- calculer une différence entre trames ($f_n$ - $f_{n-1}$) de deux trames consécutives d'une séquence de trames par calcul de la différence entre les pixels dans une carte de régions de calcul donnée desdites trames, ladite carte de régions de calcul contenant les adresses de régions de bordure et de texture et étant calculée dans un module d'amélioration vidéo pour chaque trame,

- comparer la différence entre trames calculée à une valeur de seuil interne (ITh) qui est calculée par une unité de calcul de seuil en utilisant les informations sur la zone lisse et la variance du bruit,

- si la différence entre trames calculée est supérieure audit seuil interne, attribuer à chaque paire de trames consécutives une valeur de décision de différence entre trames de 1, attribuer sinon à chaque paire de trames consécutives une valeur de décision de différence entre trames de -1,

- sélectionner le premier motif de corrélation de mode de conversion (s) dans la table de recherche en tant que mode de conversion en cours de test,

- mettre en corrélation ledit motif de corrélation de mode de conversion (s) du mode de conversion en cours de test avec une séquence de valeurs de décision de différence entre trames attribuées ($r_j$), d'une manière glissante et, pour chaque séquence de valeurs de décision de différence entre trames attribuées, calculer deux valeurs de corrélation ($c_{max,m}$, $c_{min,m}$) lors d'une période spécifique de test,

- comparer la première valeur de corrélation ($c_{max,m}$) à un premier seuil externe (OTh_H) et la seconde valeur de corrélation ($c_{min,m}$) à une seconde valeur de seuil externe (OTh_L), lesdites première et seconde valeurs de seuil externes correspondant à la paire associée au mode de conversion en cours de test,

- décider si le mode de conversion en cours de test est actif ou pas selon le résultat de la comparaison des valeurs de corrélation et desdites valeurs de seuil externes,

- s'il est actif, effectuer un filtrage médian temporel parmi les modes de conversion actifs, et décider du mode de conversion final,

- sinon, revenir à l'étape de corrélation et répéter les étapes suivantes avec le motif de corrélation de mode de conversion suivant dans la table de recherche en tant que mode de conversion en cours de test.

2. Procédé selon la revendication 1, **caractérisé en ce que** ledit premier motif de corrélation de mode de conversion est le motif de mode 50fps.

3. Procédé selon la revendication 1, dans lequel lesdites deux valeurs de corrélation ($c_{max,m}$, $c_{min,m}$) sont calculées de telle sorte que :

$$C_{max,m} = \max r_j \text{*s où } j \in \{(m-1)TSP+1,\ldots,mTSP\} \text{ et } r_j = [r_{j-k+1}, r_{j-k+2}, \ldots, r_j]$$

$$C_{min,m} = \min |r_j \text{*s}| \text{ où } j \in \{(m-1)TSP+1,\ldots,mTSP\} \text{ et } r_j = [r_{j-k+1}, r_{j-k+2}, \ldots, r_j]$$

où m est l'indice de temps de la période spécifique de test.

4. Procédé selon la revendication 3, dans lequel l'étape consistant à décider si le mode de conversion en cours de test est actif ou pas est basée sur deux critères de comparaison utilisant lesdites deux valeurs de seuil externes (OTh_H et OTh_L de telle sorte que :

si $c_{max,m} \geq$ OTh_H, alors ledit mode de conversion en cours de test est détecté provisoirement,
si $c_{min,m} \leq$ OTh_L, alors ledit mode de conversion en cours de test n'est pas actif.

5. Système de détection de mode de film comprenant :

- un module d'amélioration de vidéo pour améliorer une trame ($f_n$), et pour calculer une carte de régions de calcul contenant les adresses de régions de bordure et de texture,

- une unité de calcul de seuil pour calculer un seuil interne (ITh) en utilisant les informations sur la zone lisse et la variance de bruit, issues du module d'amélioration,

- une unité de détection de modes de conversion successifs,

- une élimination de l'effet de saccade de film pour éliminer l'effet de saccade du film,

dans lequel ladite unité de détection de modes de conversion successifs comprend :

une table de recherche qui contient une pluralité de motifs de corrélation de mode de conversion (s), qui sont ordonnés selon les critères comprenant les probabilités a priori de modes de conversion, la quantité de risque sur la mauvais choix de chaque mode de conversion, les distances entre motifs de deux modes de conversion consécutifs en cours de test et des longueurs de motifs, les niveaux d'impact différents de scènes sans mouvement sur des motifs différents et l'impact du bruit, où ladite table de recherche contient en outre des paires de valeurs de seuil externes (OTh_H, OTh_L), chaque paire étant associée à un motif de corrélation de mode de conversion ;

une unité de calcul de différence entre trames conçue pour calculer la différence entre deux trames ($f_n$-$f_{n-1}$) consécutives d'une séquence de trames en calculant la différence entre les pixels dans ladite carte de régions de calcul desdites trames ;

des premiers moyens de comparaison conçus pour comparer la différence entre trames calculée à ladite valeur de seuil interne (ITh) ;

des moyens d'attribution conçus pour attribuer une valeur de décision de différence entre trames pour chaque paire de trames consécutives, où, si la différence entre trames calculée est supérieure audit seuil interne, la valeur de décision de différence entre trames est égale à 1 et sinon, la valeur de décision de différence entre trames est égale à -1 ;

des moyens de sélection conçus pour sélectionner le premier motif de corrélation de mode de conversion dans la table de recherche en tant que mode de conversion en cours de test ;

des moyens de corrélation conçus pour mettre en corrélation ledit motif de corrélation de mode de conversion (s) du mode conversion en cours de test avec une séquence de valeurs de décision de différence entre trames attribuées ($r_j$) d'une manière glissante, en calculant, pour chaque séquence de valeurs de décision de différence entre trames attribuées, deux valeurs de corrélation ($c_{max,m}$', $c_{min,m}$) lors d'une période spécifique de test ;

des seconds moyens de comparaison conçus pour comparer la première valeur de corrélation ($c_{max,m}$) à un premier seuil externe (OTh_H) et pour comparer la seconde valeur de corrélation ($c_{min,m}$) à une seconde valeur de seuil externe (OTh_L), où lesdites première et seconde valeurs de seuil externes correspondent à la paire de valeurs de seuil externes associée au mode de conversion en cours de test ;

des moyens de décision conçus pour décider si le mode de conversion en cours de test est actif ou pas selon le résultat de la comparaison des valeurs de corrélation avec lesdites valeurs de seuil externes ;

dans lequel, si le mode de conversion en cours de test est actif, lesdits moyens de décision sont conçus pour effectuer un filtrage médian temporel parmi les modes de conversion actifs et conçus en outre pour décider du mode de conversion final ; et

dans lequel, si le mode de conversion en cours de test n'est pas actif, lesdits moyens de décision sont conçus pour revenir aux moyens de corrélation, aux seconds moyens de comparaison et aux moyens de décision avec le motif de corrélation de mode de conversion suivant dans la table de recherche en tant que mode de conversion en cours de test.

| 1 | 1 | 2 | 2 | 3 | 3 | 4 | 4 | 5 | 5 | 6 | 6 | 7 | . . . |

-1  1  -1  1  -1  1  1  1  -1  1  -1  1  -1 . . .

-1 1 -1 1 -1 1 -1 1 -1 1 -1 1 -1 1 -1 1 -1 1 -1 1 -1 1 -1 1 -1 . . .

**Figure – 1a**

| 1 | 1 | 1 | 2 | 2 | 3 | 3 | 3 | 4 | 4 | 5 | 5 | 5 | . . . |

-1  -1  1  -1  1  -1  -1  1  -1  1  -1  -1  1 . . .

-1 -1 1 -1 1 -1 -1 1 -1 1 -1 -1 1 -1 1 -1 -1 1 -1 -1 1 -1 1 -1 -1 . . .

**Figure – 1b**

| 1 | 1 | 2 | 2 | 3 | 3 | . . . | 11 | 11 | 12 | 12 | 12 | 13 | 13 | . . . |

-1  1  -1  1  -1  1  . . .  -1  1  -1  -1  1  -1  1 . .

-1 1 -1 1 -1 1 -1 1 -1 1 -1 1 -1 1 -1 1 -1 1 -1 1 -1 1 -1 1 -1 1 -1 1 . . .

**Figure – 1c**

| 1 | 1 | 2 | 3 | 3 | 4 | 5 | 5 | 6 | 7 | 7 | 8 | 9 | 9 | . . . |

-1  1  1  -1  1  1  -1  1  1  -1  1  1  -1  1 . .

-1 1 1 -1 1 1 -1 1 1 -1 1 1 -1 1 1 -1 1 1 -1 1 1 -1 1 1 -1 1 1  . . .

**Figure – 1d**

| 1 | 1 | 2 | 2 | 3 | 3 | 4 | 4 | 4 | 5 | 5 | 5 | 6 | 6 | . . . |

-1  1  -1  1  -1  1  -1  -1  1  -1  -1  1  -1  1 . .

-1 1 -1 1 -1 1 -1 -1 1 -1 -1 1 -1 1 -1 1 -1 1 -1 -1 1 -1 -1 1 -1 1 -1 . . .

**Figure – 1e**

FM

Smooth Area Map

Threshold
Computation
Unit

Inner Threshold

$f_n$

Video
Enhancement
*(Temporal Filtering)*

Edge & Texture Map Information & $f'_n$

Delay

$f'_{n-1}$

Successive
Film Mode
Detection

Film
Judder
Removal

**Figure – 2**

Inner Threshold

```
  f_n  →→→  ┌──────────┐   f_n   ┌────────┐   f_n   ┌──────────────┐   Smooth Area Map   ┌──────────────┐
  f_n-1 →→→ │ Successive│ ──────→ │  Film  │ ──────→ │    Video     │ ──────────────────→ │  Threshold   │
           │ Film Mode│         │ Judder │         │ Enhancement  │                     │ Computation  │
           │ Detection│ ──────→ │ Removal│ ──────→ │(Temporal     │                     │    Unit      │
           └──────────┘  f_n-1  └────────┘  f_n-1  │  Filtering)  │                     └──────────────┘
                                                    └──────────────┘
```

Edge & Texture Map Information

**Figure – 3**

Enable

Film Mode Detection
**Correlation Unit**
**I**

Mode
**I**
**Detected**

Y

N

Correlation
pattern
**I**

Inner
Threshold
**I**

Outer
Threshold
Set I

*Mode with highest probability of*
*recognition*

Film Mode Detection
**Correlation Unit**
**II**

Mode
**II**
**Detected**

Y

N

Correlation
pattern
**II**

Inner
Threshold
**II**

Outer
Threshold
**Set II**

*Mode with 2ⁿᵈ highest*
*probability of recognition*

Pixel Difference
Supplying Unit

$f_n$        $f_{n-1}$        Computation
**Region**
**Map**

Till all *n* modes
covered

**LUT**
**(Look Up Table)**

Correlation pattern  (n modes)

Outer Threshold  (n modes)

FINAL MODE DECISION

(Weighted)
**Temporal Median**
**Filtering**

**Figure- 4**

**EP 2 265 010 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7233361 B
- US 5563651 A
- EP 1198138 A1
- US 2005018767 A1
- US 2002135697 A1